# EUROPÄISCHE PATENTANMELDUNG

(11) **EP 0 818 579 A2**
(43) Veröffentlichungstag der Anmeldung: **14.01.1998**
(21) Anmeldenummer: 97111784.1
(22) Anmeldetag: 10.07.1997
(51) Int. Cl.: E02D 31/00

(54) **Verfahren zum Abdecken von Altlastenkörper**

(30) Priorität: 10.07.1996 DE 19627709
(71) Anmelder: GEBRÜDER FRIEDRICH GMBH, 38229 Salzgitter-Salder (DE)
(72) Erfinder: Zimmermann, Jürgen, 38239 Salzgitter-Bleckenstedt (DE)
(74) Vertreter: Paul, Dieter-Alfred, Dipl.-Ing.

(57) **Zusammenfassung**

Die Erfindung betrifft ein Verfahren zum Abdecken von Altlastenkörpern, z. B. Müll- oder Kohlehalden oder dergleichen, bei dem auf eine vorbereitete Oberfläche des Altlastenkörpers Abdeckbahnen (1) in dichtender Weise aufgelegt werden, die jeweils eine der Oberfläche zugewandte Dichtungsbahn (2), eine darauf angebrachte Drainagelage (3) und eine darauf verschiebefest vorgesehene Filterschicht (5) aufweisen. Das Verfahren ist dadurch gekennzeichnet, daß die Abdeckbahnen (1) in einander überlappender Weise angeordnet werden und in den Spalt zwischen benachbarten Abdeckbahnen (1) Saugelemente (11) eingelegt werden, die durch Kapillarwirkung Flüssigkeit zwischen den Abdeckbahnen (1) hindurch zum Altlastenkörper (1) führen.

## Beschreibung

Die Erfindung betrifft ein Verfahren zum Abdecken von Altlastenkörpern, z. B. Müll- oder Kohlehalden oder dergleichen, bei dem auf eine vorbereitete Oberfläche des Altlastenkörpers Abdichtbahnen in dichtender Weise aufgelegt werden, die jeweils eine der Oberfläche zugewandte Dichtungsbahn, eine darüber angeordnete Drainagelage und eine darauf vorgesehene Filterschicht aufweisen.

Im Stand der Technik ist es bekannt, Altlastenkörper, insbesondere Müllhalden, obenseitig mit einer Abdeckbahn zu versehen, auf die dann Mutterboden mit Pflanzen in einer Höhe von 30 bis 200 cm aufgebracht wird. Aufgabe der Abdeckung ist es dabei, ein Eindringen von Oberflächensickerwasser in den Altlastenkörper einerseits und unkontrollierte Emissionen aus dem Deponiekörper in den Boden und in die Atmosphäre andererseits zu verhindern.

Aus der DE-PS 34 44 895 ist es bekannt, die Abdeckbahn aus Sandwichplatten auszubilden, die jeweils eine untenliegende Dichtungsschicht, eine darüberliegende Drainageschicht und eine darauf liegende Filterschicht aus Vliesmaterial aufweisen. Das Sickerwasser, das von der Oberfläche der Deponieabdekkung in den Wurzelboden eindringt, wird dabei von der Dichtungsschicht zurückgehalten und in der darüberliegenden Drainageschicht, die in Form eines Gitters ausgebildet ist, abgeführt. Die Filterschicht hat die Aufgabe, das Eindringen von feinen Bodenteilchen in die Drainageschicht zu verhindern.

Oftmals ist es jedoch auch gewünscht, daß die Abdichtung nicht hundertprozentig erfolgt, sondern eine geringe, definierte Flüssigkeitsmenge durch die Abdeckbahnen hindurchtreten kann.

Der Erfindung liegt daher die Aufgabe zugrunde, ein Verfahren zum Abdecken von Altlastenkörpern zu schaffen, das es ermöglicht, dem Altlastenkörper nach der Abdeckung noch in definierter Weise Flüssigkeit zuzuführen.

Diese Aufgabe wird erfindungsgemäß dadurch gelöst, daß die Abdeckbahnen in einander überlappender Weise angeordnet werden und in den Spalt zwischen benachbarten Abdeckbahnen Saugelemente eingelegt werden, die durch Kapillarwirkung Flüssigkeit zwischen den Abdeckbahnen hindurch zum Altlastenkörper führen. Bei dem erfindungsgemäßen Verfahren werden die Abdeckbahnen somit schindelartig übereinandergelegt, wobei sie ggf. auch miteinander verbunden werden können, so daß eine vollständige Abdichtung des Altlastenkörpers erreicht wird. Allerdings werden zusätzlich zwischen die Abdeckbahnen Saugelemente angeordnet, die bei ansonsten vollständiger Abdichtung dem Altlastenkörper Flüssigkeit zuführen. Da diese Saugelemente über Kapillarwirkung die Flüssigkeit transportieren, kann die Flüssigkeitsmenge, die dem Altlastenkörper zugeführt wird, ziemlich genau Art und Anzahl von Saugelementen definiert vorgegeben werden. Vorzugsweise werden dabei Saugelemente aus Vliesmaterial verwendet.

Gemäß einer Ausführungsform der Erfindung ist vorgesehen, daß die Drainagelage durch eine Vielzahl von an der Oberseite der Dichtungsbahn ausgebildeten Vorsprüngen gebildet ist. Durch diese einstückige Ausbildung der Drainagelage in Form von Vorsprüngen an der Dichtungsbahn wird erreicht, daß Dichtungsbahn und Drainagelage in einem Arbeitsgang beispielsweise durch Spritzguß zusammen hergestellt werden können. Hierdurch wird die Herstellung im Vergleich zu den bekannten Abdeckbahnen, bei denen die einzelnen Schichten getrennt voneinander hergestellt und dann miteinander verschweißt werden müssen, deutlich vereinfacht.

Die Vorsprünge haben vorzugsweise eine einfache Gestalt, beispielsweise Noppenform, wobei sie so ausgestaltet sein müssen, daß sie bei gewünschter Dicke der Drainagelage von beispielsweise 5 bis 25 mm eine ausreichende Festigkeit haben und insbesondere nicht knicken.

Alternativ kann die Drainagelage in üblicher Weise aus sich kreuzenden Kunststoffdrähten oder dergleichen bestehen, wobei diese dann mit der Dichtungsbahn vorzugsweise durch thermische Verschmelzung oder Verklebung miteinander verbunden sind, um ihre gegenseitige Verschiebefestigkeit zu gewährleisten.

Als Materialien für die Dichtungsbahn kommen Polyethylen, Polyvinylchlorid, Polypropylen, ECB und Ethylen/Vinylacetet-Copolymere in Frage. Für den Trennkörper können Polypropylen, Polyethylen und Polyamid verwendet werden. Als Material für das Filtervlies kommen Polypropylen, Polyester und Polyethylen zur Anwendung.

Für die Dichtungsbahn wird eine Dicke von 0,5 bis 4 mm vorgeschlagen.

Die Filterschicht ist vorzugsweise als Filtervlies mit einem Flächengewicht von 70 bis 800 g/m² ausgebildet. Auch hier sollten die Filterschicht und die Drainagelage durch thermische Verschmelzung oder Verklebung miteinander verbunden sein.

Nach einem weiteren Merkmal der Erfindung ist vorgesehen, daß die Dichtungslage außenseitig aufgerauht ist, damit sie nicht gegenüber dem Untergrund, auf dem sie aufgelegt ist, verrutschen kann. Besonders vorteilhaft ist, die Aufrauhung mit Hilfe einer Profilierung vorzusehen, beispielsweise durch vorspringende Stege oder durch Nuten.

Die Erfindung sieht desweiteren vor, daß die Dichtungsbahn an einer Längs- und einer Querseite Überlappungsbereiche aufweist, welche über die Drainagelage und die Filterschicht vorstehen. Der Überstand dient dazu, eine Überlappung mit einer benachbarten Abdeckbahn herzustellen und so eine gasdichte Abdeckung im Überlappungsbereich zu ermöglichen. Auf diese Weise kann die gesamte Abdeckung flüssigkeitsdicht gestaltet werden.

Desweiteren ist vorgeschlagen, daß die Drainagelage und die Filterschicht an einer Längs- und einer Querseite über die Dichtungsbahn vorstehen, um auch insoweit eine Überlappung mit benachbarten Abdeckbahnen zu ermöglichen. Vorzugsweise sollte dabei die Filterschicht an einer Längs- und einer Querseite über die Drainagelage vorstehende Überlappungsbereiche bilden, so daß die Filterschichten nicht nur aneinanderstoßen, sondern auch überlappen.

In der Zeichnung ist die Erfindung anhand eines Ausführungsbeispiels näher veranschaulicht. Es zeigen:
- Figur 1: das Ende einer ersten Ausführungsform einer erfindungsgemäßen Abdeckbahn in Schrägansicht und schematisch dargestellt,
- Figur 2: die Abdeckbahn gemäß Figur 1 in detaillierterer Darstellung,
- Figur 3: in geschnittener Seitenansicht zwei sich teilweise überlappende Abdeckbahnen gemäß Figur 1,
- Figur 4: das Ende einer zweiten Ausführungsform einer erfindungsgemäßen Abdeckbahn in Schrägansicht und schematisch dargestellt, und
- Figur 5: die Abdeckbahn gemäß Figur 4 in detaillierterer Darstellung

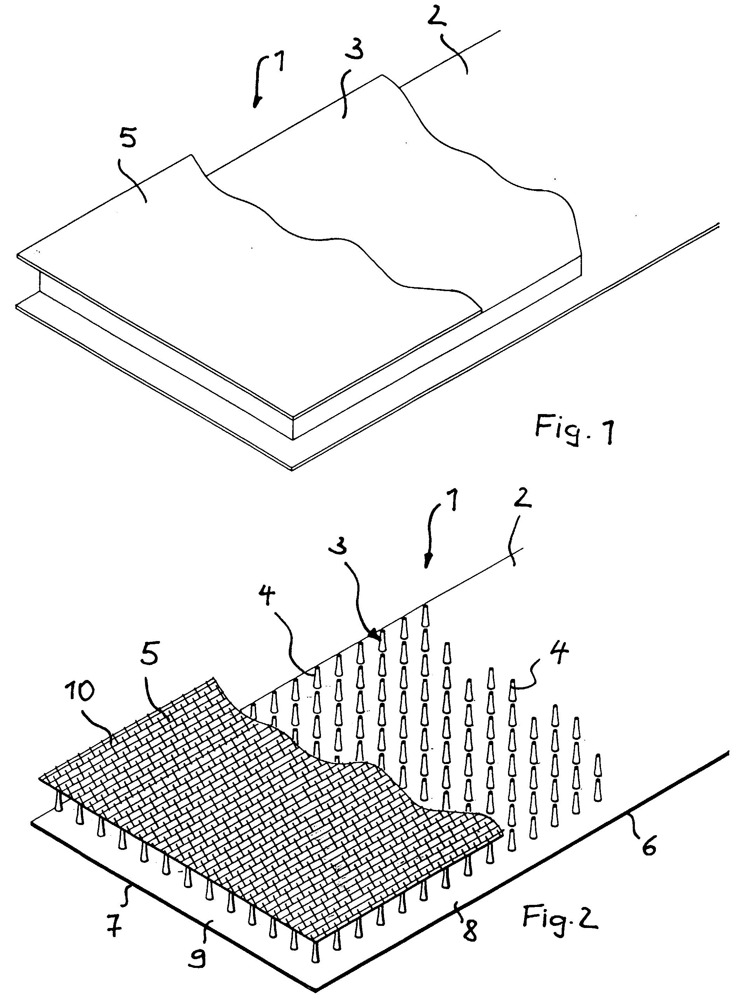

Die in den Figuren dargestellte Abdeckbahn 1 ist dreilagig aufgebaut. Sie hat an der Unterseite eine aus einer Kunststoffolie bestehende Dichtungsbahn 2, auf die eine Drainagelage 3 aufgebracht ist. Wie aus Figur 2 zu ersehen, besteht die Drainagelage 3 aus aus einer Vielzahl von Noppen 4, die parallel zueinander von der Oberfläche der Dichtungsbahn 2 vorstehen. Diese Ausbildung hat den Vorteil, daß die Noppen 4 zusammen mit der Dichtungsbahn 2 in einem Arbeitsgang beispielsweise durch Spritzgießen hergestellt werden kann.

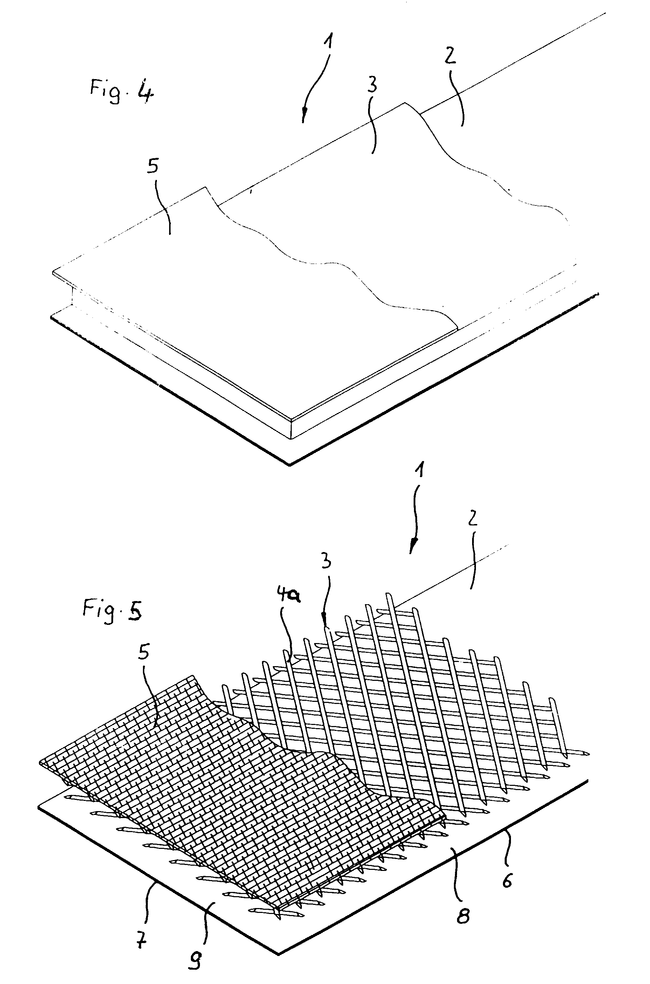

Bei einer alternativen Ausbildungsform, die in den Figuren 4 und 5 dargestellt ist, wir die Drainagelage 3 aus zwei Schichten von jeweils parallel zueinander verlaufenden Kunststoffdrähten - beispielhaft mit 4a bezeichnet - gebildet, die so aufeinandergelegt sind, daß sie sich kreuzen.

Auf die Drainagelage 3 ist eine aus einem Filtervlies bestehende Filterschicht 5 aufgebracht und mit der Drainagelage 3 verbunden, und zwar durch thermische Behandlung, die zu einer Verschweißung der Kontaktstellen der Noppen 4 mit der Filterschicht 5 geführt hat.

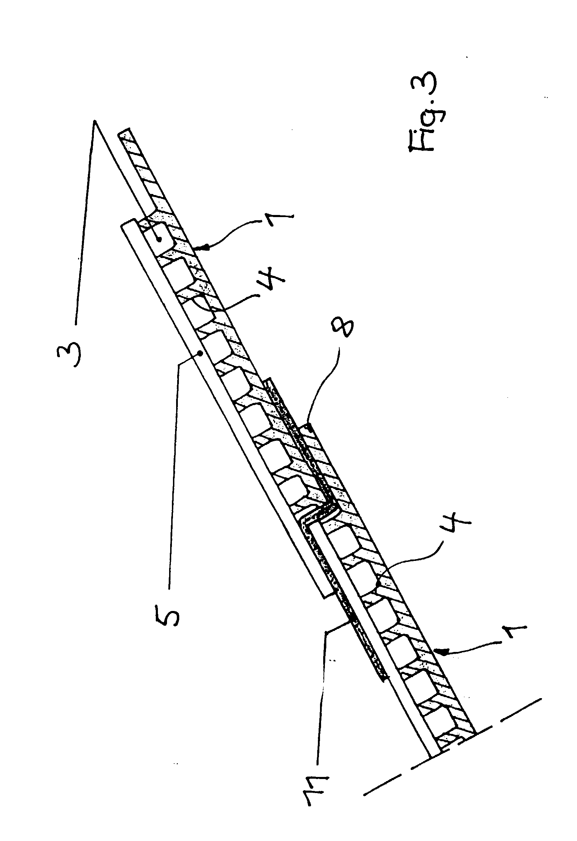

Die Drainagelage 3 erstreckt sich nicht über den gesamten Bereich der Dichtungsbahn 2, sondern läßt an einer Längsseite 6 und einer Querseite 7 jeweils einen Randstreifen frei. Außerdem ist die Filterschicht 5 derart gegenüber der Dichtungsbahn 2 versetzt angeordnet, daß die Dichtungsbahn 2 an der Längsseite 6 und der Querseite 7 im Bereich der noppenfreien Randbereiche Überlappungsbereiche 8, 9 bildet, die frei von Drainagelage 3 und Filterschicht 5 sind. Über diese Bereiche 8, 9 kann, wie in Figur 3 dargestellt ist, eine Überlappung mit benachbarten Abdeckbahnen 1 hergestellt werden.

Da die Filterschicht 5 die gleichen Abmessungen wie die Dichtungsbahn 2 hat, hat die vorgenannte Versetzung von Dichtungsbahn 2 und Filterschicht 5 zur Folge, daß die Filterschicht 5 an den den Überlappungsbereichen 8, 9 gegenüberliegenden Seiten Überlappungsbereiche 10 bildet, die frei von Filterschicht 5 und Drainagelage 3 sind, und über die ebenfalls eine Überlappung mit den benachbarten Abdeckbahnen hergestellt wird.

Wie die Figur 3 zeigt, sind zwischen die Abdeckbahnen 1 Saugelemente 11 aus einem Vliesmaterial eingelegt. Über diese Saugelemente 11 wird dem Altlastenkörper bei ansonsten dichter Abdeckung in definierter Weise von außen Flüssigkeit zugeführt. Die Menge kann dabei über die Kapillarkraft und die Anzahl von verwendeten Saugelementen 11 präzise vorgegeben bzw. eingestellt werden.

## Patentansprüche

1. Verfahren zum Abdecken von Altlastenkörpern z. B. Müll- oder Kohlehalden oder dergleichen, bei dem auf eine vorbereitete Oberfläche des Altlastenkörpers Abdeckbahnen (1) in dichtender Weise aufgelegt werden, die jeweils eine der Oberfläche zugewandte Dichtungsbahn (2), eine darauf angebrachte Drainagelage (3) und eine darauf verschiebefest vorgesehene Filterschicht (5) aufweisen,
dadurch gekennzeichnet, daß die Abdeckbahnen (1) in einander überlappender Weise angeordnet werden und in den Spalt zwischen benachbarten Abdeckbahnen (1) Saugelemente (11) eingelegt werden, die durch Kapillarwirkung Flüssigkeit zwischen den Abdeckbahnen (1) hindurch zum Altlastenkörper (1) führen.

2. Verfahren nach Anspruch 1,
dadurch gekennzeichnet, daß die Saugelemente (11) aus einem Vliesmaterial bestehen.

3. Verfahren nach Anspruch 1 oder 2,
dadurch gekennzeichnet, daß als Drainagelagen (3) jeweils eine Vielzahl von Vorsprüngen (4) an der Oberseite der Dichtungsbahnen (2) ausgebildet werden.

4. Verfahren nach Anspruch 3,
dadurch gekennzeichnet, daß die Vorsprünge (4) noppenartig ausgebildet werden.

5. Verfahren nach Anspruch 3 oder 4,
dadurch gekennzeichnet, daß die Dichtungsbahnen (2) mit den Vorsprüngen (4) durch Spritzguß hergestellt werden.

6. Verfahren nach einem der vorherigen Ansprüche,
dadurch gekennzeichnet, daß Drainagelagen (3) mit jeweils einer Dicke von 5 bis 25 mm verwendet werden.

7. Verfahren nach einem der vorherigen Ansprüche,
dadurch gekennzeichnet, daß die Dichtungsbahnn (2) aus einer Kunststoffolie hergestellt werden.

8. Verfahren nach Anspruch 7,
dadurch gekennzeichnet, daß Dichtungsbahnen (2) mit einer Dicke von 0,5 bis 4 mm verwendet werden.

9. Verfahren nach einem der vorherigen Ansprüche,
dadurch gekennzeichnet, daß für die Filterschicht ein Filtervlies (5) verwendet wird.

10. Verfahren nach Anspruch 9,
dadurch gekennzeichnet, daß ein Filtervlies (5) mit einem Flächengewicht von 70 bis 800 g/m² verwendet wird.

11. Verfahren nach einem der Ansprüche 1 bis 10,
dadurch gekennzeichnet, daß die Filterschicht (5) und die Drainagelage (3) durch thermische Verschmelzung miteinander verbunden werden.

12. Verfahren nach einem der Ansprüche 1 bis 9,
dadurch gekennzeichnet, daß die Dichtungsbahnen (2) außenseitig vor dem Verlegen aufgerauht werden.

13. Verfahren nach Anspruch 12,
dadurch gekennzeichnet, daß die Dichtungsbahnen (2) außenseitig mit einer Profilierung versehen werden.

14. Verfahren nach einem der Ansprüche 1 bis 13,
dadurch gekennzeichnet, daß die Dichtungsbahnen (2) jeweils an einer Längs- und einer Querseite (6, 7) Überlappungsbereiche (8, 9) aufweisen, welche über die Drainagelage (3) und die Filterschicht (5) vorstehen, über die die Überlappung mit benachbarten Abdeckbahnen (1) hergestellt wird.

15. Verfahren nach einem der Ansprüche 1 bis 14,
dadurch gekennzeichnet, daß die Drainagelage (3) und die Filterschicht (5) der Abdichtbanen (1) jeweils an einer Längs- und einer Querseite Überlappungsbereiche aufweisen, die über die Dichtungsbahn (2) vorstehen, über die die Überlappung mit benachbarten Abdeckbahnen (1) hergestellt wird.

16. Verfahren nach einem der Ansprüche 1 bis 14,
dadurch gekennzeichnet, daß die Filterschichten (5) der Abdeckbahnen (1) jeweils an einer Längs- und einer Querseite über die Drainagelage (3) und die Dichtungsbahnen (2) vorstehende Überlappungsbereiche bilden, über die die Überlappung mit benachbarten Abdeckbahnen (1) hergestellt wird.
